# EUROPEAN PATENT SPECIFICATION

(11) **EP 3 355 703 B1**
(45) Date of publication and mention of the grant of the patent: **27.01.2021**
(21) Application number: 16769944.6
(22) Date of filing: 15.09.2016
(51) Int. Cl.: A23D 7/005, A23G 1/00, A23G 1/36, C11C 3/04, A23G 1/56, A23G 3/34

(54) **TEMPERATURE TOLERANT CHOCOLATE SPREAD OR FILLING AND METHOD OF PREPARATION**
TEMPERATURTOLERANTER SCHOKOLADENAUFSTRICH ODER -FÜLLUNG UND VERFAHREN ZUR HERSTELLUNG
PÂTE À TARTINER OU REMPLISSAGE AU CHOCOLAT TOLÉRANT À LA TEMPÉRATURE ET PROCÉDÉ DE PRÉPARATION

(30) Priority: 29.09.2015 EP 15187465
(43) Date of publication of application: 08.08.2018
(73) Proprietor: Bunge Loders Croklaan B.V., 1521 AZ Wormerveer (NL)
(72) Inventor: MANSON, Helga, 1521 AZ Wormerveer (NL); BHAGGAN, Krishnadath, 1521 AZ Wormerveer (NL)
(74) Representative: Potter Clarkson
(86) International application number: PCT/EP2016/071894
(87) International publication number: WO 2017/055102

(56) References cited:
- WO-A1-2014/016245
- WO-A1-2014/037007
- WO-A1-2015/132206
- US-B1- 6 277 433

## Description

### Background

Spreads, such as hazelnut or chocolate spreads, are prepared by mixing fat such as palm fat with hazelnut paste or chocolate to form a sweet spread that can easily be applied to for instance a sandwich by using common cutlery such as a spoon or a knife.

A problem with spreads is that the mixture of components may be unstable, leading to phase separation of the oil from the mixture (de-oiling/oil exudation). This leads to an unappealing appearance of the spread, and may also affect the taste and texture experienced when consuming the spread. Deoiling behavior may occur over time, and may be affected by the storage temperature of the spread.

Another problem that may occur with spreads is that the temperature tolerance for spreadability may be limited. Consumers may find it difficult to apply the spread at temperatures outside the appropriate temperature window. At temperatures below the suitable temperature range for spreadability, the spread is solid and excessive force is needed to apply the spread. Above the suitable temperature range, the spread becomes liquid and will insufficiently adhere to the cutlery (such as a knife) used to apply the spread to for instance a sandwich.

Another problem in spreads is that spreads, when stored in a refrigerator the spread can not be consumed immediately as the structure has become too hard to take out of the container by for instance a spoon or knife. This is referred to as the spoonability of the spread. Refrigerators are usually designed to cool products to a temperature under 10 °C.

It is particularly difficult to prepare a chocolate spread that has a sufficient chocolate flavor. When low amounts of chocolate are added, the chocolate taste is not strong enough. However, at higher levels of chocolate, the mixture may become unstable and shows recrystallization behavior after extended storage. The formation of crystals at the surface gives the spread an unappealing appearance and may affect the taste and texture.

Although satisfactory chocolate spreads are commercially available, these spreads only show the desired properties over a limited temperature range.

WO2014/016245 and WO2015/132206 disclose confectionery spread and/or filling compositions comprising interesterified shea olein fractions.

US6277433 discloses icing compositions, margarine or frying fats comprising randomised, interesterified shea olein.

It is an object of the invention to enable chocolate spreads that display desirable properties over a wider temperature range.

The present invention relates to a chocolate spread composition comprising cocoa butter, cocoa mass and/or cocoa powder, one or more of the ingredients selected from hazelnut paste, milk fat, milk powder, vanilla, and lecithin; 2% to 40 % by weight of a fat composition; 30% to 50% by weight of sugar; wherein the fat composition comprises at least 40 % by weight of interesterified shea olein and optionally up to 60% by weight of a liquid vegetable oil; wherein the interesterified shea olein has an oleic acid content of at least 50 % by weight and a stearic acid content of at least 25% by weight, based on the total C12 to C20 fatty acids present in the interesterified shea olein, and wherein the interesterified shea olein has a solid fat content of at least 10 % at 10°C, at least 6 % at 20°C, and at least 3 % at 30°C. The chocolate spread can also be used as a chocolate filling.

Preferably, the fat composition comprises at least 80%, preferably at least 90%, by weight of interesterified shea olein. More preferably, the fat composition comprises at least 99% by weight of interesterified shea olein and up to 1% by weight of a liquid oil. It is even more preferred if the composition comprises 100% by weight interesterified shea olein.

In a preferred embodiment, the liquid oil comprises soybean, sunflower and/or rapeseed oil, preferably rapeseed oil. Preferably, the liquid oil consists of rapeseed oil.

The spread comprises cocoa butter, cocoa mass and/or cocoa powder, wherein preferably the amount of cocoa butter, cocoa mass and/or cocoa powder is at least 10% by weight of the spread, preferably at least 15% by weight.

It is advantageous if the chocolate spread composition is essentially free of nuts components other than cocoa butter, cocoa mass and/or cocoa powder.

Preferably, the chocolate spread composition comprises a combination of milk powder and lecithin. In a preferred embodiment, the interesterified shea olein has a solid fat content in the range of from 10-20 % at 10°C, from 6-16 % at 20°C, and from 3-13 % at 30°C. Solid fat contents mentioned herein are determined using NMR spectroscopy according to the IUPAC 2.150a method.

It is advantageous if the composition has a good spoonability using a dry metal spoon at temperatures in the range of 1-15 °C, preferably in the range of 4-12 °C.

Preferably, the spread does not show recrystallization after storage at 15 °C for at least one month, preferably after 3 months.

Preferably, the spread does not show oil exudation after storage at 15 °C for at least one month, preferably after 3 months.

The invention also relates to a method of preparation of a chocolate spread composition, comprising the step of mixing a fat composition with other chocolate spread ingredients; wherein the fat composition comprises at least 60 % by weight of interesterified shea olein and optionally up to 40% by weight of a liquid vegetable oil; wherein the interesterified shea olein has an oleic acid content of at least 50 % by weight and a stearic acid content of at least 25% by weight, based on the total C12 to C20 fatty acids present in the interesterified shea olein, and wherein the interesterified shea olein has a solid fat content of at least 10 % at 10°C, at least 6 % at 20°C, and at least 3 % at 30°C.

Preferably, the fat composition is mixed with one or more of the ingredients selected from hazelnut paste, cocoa butter, cocoa mass, cocoa powder, milk fat, milk powder, vanilla, and lecithin; sugar; and optional other ingredients.

The invention will now be further elucidated by the following non-limiting examples.

### Examples

### Example 1: Preparation of fat blends

### A: interesterified shea olein

About 5000 gram of shea olein was chemically interesterified. The oil was heated to 110°C and dried for 30 min at a pressure of about 50 mbar. To this dried oil was added sodium methoxide (0.10% w/w) and the mixture was stirred for 30 min at about 100 mbar. After this, the reaction was stopped by adding citric acid and washed with water afterwards until essentially free of soaps. The interesterified shea olein was further refined according to a standard refining procedure (bleaching and deodorization) for further use. The analytical results are shown in table 1 under fat blend A. Interesterified shea olein A (inShf) was blended with rapeseed oil (RP) to yield blends B and C. Analytical results are also shown in table 1. As a reference fat, the commercially available fully refined fat Durkex 102 was used, as obtained from Loders Croklaan BV, the Netherlands. This reference fat is based on a palm olein fraction, and is used in commercially available chocolate spreads. The analytical results are also shown in table 1.

### Example 2: fat blends analytical data

Solid Fat content (SFC) is determined using NMR spectroscopy according to the IUPAC 2.150a method. Solid fat contents at x °C are denoted as Nx. For example, a solid fat content at 20 °C is referred to as N20.

Fatty acid residue composition was determined using fatty acid methyl ester analysis (FAME) gas chromatography according to ISO 15304. Cx:y refers to a fatty acid having x carbon atoms and y double bonds; The extension 'c' refers to cis fatty acids and 't' refers to trans fatty acids. Fatty acids are straight chain carboxylic acids having from 8 to 24 carbon atoms and optionally one or more double bonds.

The fatty acid compositions are characterized in the content of saturated fatty acids (SAFA), monounsaturated fatty acids (MUFA) and polyunsaturated fatty acids (PUFA). SAFA are fatty acids without unsaturated bonds, such as palmitic acid (C16:0) and oleic acid (C18:0). As defined herein, SAFA is the total of C12:0, C14:0, C16:0, C17:0, C18:0, C20:0, C22:0 C24:0. Mono unsaturated fatty acids (MUFA) are fatty acids having a single carbon-carbon double bond, which may be in either the cis or trans configuration. Total trans is the total amount of trans fatty acids.

The group of MUFA includes but is not restricted to palmitoleic acid (C16:1 cis) and oleic acid (C18:1 cis). As defined herein, MUFA is the total of C16:1 c/t, C18:1 c/t, C20:1 c/t, C22:1 c/t and C24:1 c/t; wherein c/t indicates the combined amounts of cis and trans fatty acids for that particular number of carbon atoms. Polyunsaturated fatty acids (PUFA) have more than one carbon-carbon double bond, such as two or three double bonds. SAFA, MUFA and PUFA values are calculated by adding up amounts of the respective compounds as determined through the FAME analysis.

Iodine value (IV) was calculated according to AOCS Cd 1c-85, based on the fatty acid composition, as determined using fatty acid methyl ester analysis (FAME) gas chromatography according to ISO 15304. IVFAME refers to the calculated iodine value.

Triglyceride composition was determined using gas chromatography according to ISO 23275. In the table the triglycerides are identified as 3-letter coded names according to the fatty acid residues, wherein A=Arachidoyl-, L= linoleoyl-, M = myristoyl-, P = palmitoyl, O = oleoyl-, St = Stearoyl-. For instance StOSt means 2-oleoyl-1,3-distearoylglyceride. SUMSOS refers to total SOS (S is stearic or palmitic acid and O is oleic acid).

**Table 1. Analysis results for fats used for recrystallization test**

| **Example** | **A inSHf** | **B 50/50 inSHf/RP** | **C 80/20 inSHf/RP** | **Ref Durkex 102** |
|---|---|---|---|---|
| **Solid Fat Content** | | | | |
| US-N10 NMR | 14.1 | 7.8 | 8.9 | 11.3 |
| US-N15 NMR | 10.8 | 6.6 | 9 | 6.9 |
| US-N20 NMR | 9.3 | 4.1 | 7.7 | 4.5 |
| US-N25 NMR | 7.4 | 2.6 | 5.1 | 2.7 |
| US-N30 NMR | 5.3 | 2.1 | 3.7 | 1.2 |
| US-N35 NMR | 3.7 | 1.3 | 2.4 | 0 |
| | | | | |

| **FAME** | | | | |
|---|---|---|---|---|
| C8:0 | 0 | 0 | 0 | 0 |
| C10:0 | 0 | 0 | 0 | 0 |
| C12:0 | 0 | 0 | 0.1 | 0.3 |
| C14:0 | 0 | 0.1 | 0.1 | 1 |
| C15:0 | 0 | 0 | 0 | 0 |
| C16:0 | 4.2 | 4.3 | 4.3 | 35.6 |
| C16:1T | 0 | 0 | 0 | 0 |
| C16:1C | 0.1 | 0.2 | 0.1 | 0.3 |
| C17:0 | 0.1 | 0.1 | 0.1 | 0.1 |
| C18:0 | 29.7 | 15.1 | 23.7 | 4 |
| C18:1 | 54.9 | 59.2 | 56.5 | 44 |
| C18:1T | 0.1 | 0 | 0.1 | 0.1 |
| C18:1C | 54.9 | 59.2 | 56.5 | 44 |
| C18:2 | 8.5 | 13.9 | 10.7 | 13.5 |
| C18:2T | 0.1 | 0.1 | 0.1 | 0.2 |
| C18:2C | 8.3 | 13.8 | 10.5 | 13.3 |
| C18:3 | 0.3 | 4.8 | 2.2 | 0.4 |
| C18:3T | 0.1 | 0.6 | 0.3 | 0.1 |
| C18:3C | 0.1 | 4.2 | 1.9 | 0.3 |
| C20:0 | 1.3 | 0.9 | 1.1 | 0.4 |
| C20:1C | 0.5 | 0.7 | 0.5 | 0.2 |
| C20:2C | 0 | 0 | 0 | 0 |
| C22:0 | 0.1 | 0.2 | 0.2 | 0.1 |
| C22:1 | 0 | 0 | 0 | 0 |
| C22:1T | 0 | 0 | 0 | 0 |
| C22:1C | 0 | 0 | 0 | 0 |
| C24:0 | 0.1 | 0.1 | 0.1 | 0.1 |
| C24:1C | 0 | 0.1 | 0 | 0 |
| Others | 0.2 | 0.3 | 0.3 | 0.1 |
| | | | | |
| SAFA | 35.5 | 20.8 | 29.6 | 41.6 |
| MUFA | 55.5 | 60.2 | 57.3 | 44.4 |
| PUFA | 8.7 | 18.7 | 12.9 | 13.9 |
| **IVFAME** | 63.1 | 88.4 | 73.4 | 62.6 |
| Total Trans | 0.3 | 0.8 | 0.5 | 0.4 |
| SAFA g/100g fat | 33.8 | 19.8 | 28.1 | 39.5 |
| MUFA g/100g fat | 52.7 | 57.2 | 54.4 | 42.2 |
| PUFA g/100g fat | 8.3 | 17.8 | 12.2 | 13.2 |

| **Triglycerides** | | | | |
|---|---|---|---|---|
| MPP | 0 | 0 | 0 | 0.2 |
| MOM | 0 | 0 | 0.2 | 0.1 |
| PPP | 0 | 0.1 | 0.2 | 2.4 |
| MOP | 0 | 0.7 | 2 | 1.6 |
| MLP | 0 | 0 | 0.6 | 0.6 |
| PPSt | 0.2 | 0.1 | 0.3 | 0.5 |
| POP | 0.5 | 0.1 | 0.3 | 16.3 |
| PLP | 0.5 | 0.3 | 0.5 | 11.5 |
| C50 Others | 1.1 | 0.2 | 0.9 | 1.1 |
| PStSt | 2.1 | 0.6 | 1 | 0.1 |
| POSt | 4.5 | 2.1 | 4 | 2.6 |
| POO | 4.4 | 5.4 | 4.7 | 31.1 |
| PLSt | 0.7 | 0.6 | 0.7 | 2.4 |
| PLO | 1.4 | 3 | 1.9 | 13.6 |
| PLL | 0.3 | 1.4 | 0.2 | 2.8 |
| StStSt | 3 | 1.7 | 2.3 | 0 |
| StOSt | 16.8 | 9.2 | 13.5 | 1.2 |
| StOO | 27.4 | 15.6 | 21.4 | 3.2 |
| StLSt | 1.8 | 0.8 | 1.5 | 0.2 |
| OOO | 16.4 | 24.7 | 18.2 | 4.1 |
| StLO | 7.5 | 5.9 | 6.9 | 1.6 |
| OLO | 6.7 | 14.8 | 9.4 | 1.9 |
| StLL | 0.6 | 0.3 | 0.5 | 0.3 |
| OLL | 1.2 | 6.1 | 2.5 | 0.4 |
| AStSt | 0 | 1.9 | 1.1 | 0 |
| AOSt | 1.1 | 2.5 | 1.1 | 0 |
| AOO | 1.3 | 0.8 | 0.8 | 0.2 |
| ALSt | 0.1 | 0 | 0.4 | 0 |
| Others | 0.4 | 1.3 | 3 | 0.1 |
| SUMSOS | 21.8 | 11.4 | 17.8 | 20.1 |

### Example 3: chocolate spreads

A chocolate spread was prepared by mixing the following ingredients using a ball mill at 240 rpm for 45 minutes. Fat blend B was used. For a reference spread, the fat blend was replaced by a standard chocolate spread fat, Durkex 102 obtained from Loders Croklaan BV, Wormerveer, the Netherlands.

| **Ingredient** | **Percentage** |
|---|---|
| Sugar | 40 |
| Fat blend | 35 |
| Milk chocolate (Milka) | 15 |
| Skimmed milk powder | 5 |
| Cocoa powder 74 | 5 |
| Lecithin | 0.4 |

### Example 4: chocolate spreads with hazelnut paste

A chocolate spread with hazelnut paste was prepared by mixing the following ingredients using a ball mill at 240 rpm for 45 min.

| **Ingredient** | **Percentage** |
|---|---|
| Sugar | 48 |
| Fat blend | 22 |
| Hazelnut paste 100% | 13 |
| Skimmed milk powder | 9 |
| Cocoa powder alkalised | 8 |
| Lecithin | 0.4 |

The chocolate spreads were prepared using the fat blends according to table I. As a reference, fat blend Durkex 102 was used. Chocolate spreads are summarized in table 2.

**Table 2: Chocolate spreads according to recipes as described in examples 3 and 4.**

| | |
|---|---|
| **Chocolate spread (ex 3)** | **Fat blend** |
| 1 | B |
| 2 | Ref |
| **Chocolate spread + Hazelnut paste (ex 4)** | **Fat blend** |
| 3 | A |
| 4 | B |
| 5 | C |
| 6 | Ref |

### Example 5: Storage trials: Recrystallization

The spreads prepared according to example 3 where deposited at 50°C in containers and cooled in a static cooling cabinet (12°C) for at least 20 minutes. After the initial cooling, the spreads were stored at different temperatures for further evaluation. The spreads were stored at temperatures of 15°C, 20°C, 25°C, 30°C, as well as under temperature cycling conditions cycling between 15°C 12 hours and 25°C for 12 hours and evaluated immediately after 1 night at ambient temperature (20°C) and after 1, 2 or 3 weeks, and after 1, 2 or 3 months. Recrystallization results are summarized in table 3.

The samples were evaluated for the following properties: Appearance (re-crystallization, oil exudation and gloss) and sensory evaluation.

**Table 3: recrystallization results.**

| **Chocolate spread (ex 3)** | **Fat blend** | **Recrystallization** |
|---|---|---|
| 1 | B | no |
| 2 | Ref | yes |

| **Chocolate spread + hazelnut (ex 4)** | | |
|---|---|---|
| 4 | B | no |
| 6 | Ref | no |

For the chocolate spread based on fat blend B, no re-crystallization occurred, whereas recrystallization was clearly visible for the other chocolate spreads including the chocolate/hazelnut spreads. Samples where recrystallization had occurred showed crystals on the surface, including the chocolate/hazelnut spread using the same fat blend as the chocolate spread according to example 2.

These data show that fat blend B offers a solution for circumventing recrystallization in all-chocolate spreads without added hazelnut paste according to example 3.

### Temperature tolerance

The spreads 4-6 according to example 4 were stored at 50°C in containers and cooled in a static cooling cabinet (12°C) for at least 20 minutes. Subsequently, the containers were stored at different temperatures for further evaluation at fridge temperature (approx. 7°C), 20°C, 25°C, 40°C with cycling: 12 hours 20°C/ 12 hours 40°C. The samples were evaluated initially after 1 night, after 1 week and after 1 month.

### Spoonability

The samples were further tested for spoonability after storage for one week or one month at 7 °C. The samples were investigated qualitatively by attempting to scoop a spoon full of chocolate spread from a container directly after taking the container from the refrigerator, using a dry metal spoon at ambient temperature (20 °C). A new spoon at ambient temperature was used for each sample to rule out the influence of heating by hand warmth. As a reference, a chocolate spread based on Durkex 102 was used. Results are shown in tables 4a and 4b.

**Table 4a: Spoonability after 1 week at 7°C**

| **Chocolate spread** | **Fat composition** | **Spoonability** |
|---|---|---|
| 3 | A | Hard, not spoonable |
| 4 | B | Softer than 3, spoonable |
| 5 | C | Harder than 4, spoonable |
| 6 | Ref | Hard, not spoonable |

**Table 4b: Spoonability after 1 month at 7°C**

| **Chocolate spread** | **Fat composition** | **Spoonability** |
|---|---|---|
| 3 | A | Hard, not spoonable |
| 4 | B | Spoonable |
| 5 | C | Hard, not spoonable |
| 6 | Ref | Hard, not spoonable |

The appearance was assessed after one day, one week and one month, as shown in the following tables. Appearance was evaluated for oil exudation, re-crystallization, gloss and contraction. Gloss is indicated by a gloss factor ranging from 1-5, wherein 1 is matte (no gloss) and 5 is very glossy. Deoiling/oil exudation is indicated with the code OE. A grainy texture is indicated with the code GR. Results are shown in tables 5a, 5b and 5c.

**Table 5a: Gloss after one day**

| **Sample** | **Fat** | **7°C** | **20°C** | **25°C** | **40°C** | **20/40°C** |
|---|---|---|---|---|---|---|
| **3** | A | 1/2 | 2 | 2 | 5 | 5 |
| **4** | B | 2/3 | 3 | 3 | 5 | 5 |
| **5** | C | 2 | 2/3 | 2/3 | 5 | 5 |
| **6** | Ref | 3/4 | 4 | 4 | 5 | 5 |

**Table 5b: Gloss after one week**

| **Sample** | **Fat** | **7°C** | **20°C** | **25°C** | **40°C** | **20/40°C** |
|---|---|---|---|---|---|---|
| **3** | A | 1 | 1/2 | 2 | 5 | 5 |
| **4** | B | 1 | 3 | 3 | 5 OE | 5 |
| **5** | C | 1 | 2 | 2/3 | 5 OE | 5 |
| **6** | Ref | 1 | 4 | 4 | OE | 5 |

**Table 5c: Gloss after one month**

| **Sample** | **Fat** | **7°C** | **20°C** | **25°C** | **40°C** | **20/40°C** |
|---|---|---|---|---|---|---|
| **3** | A | 1 | 1/2 | 2 | 5 | 5 OE |
| **4** | B | 1 | 3/4 | 3 | OE | 5 |
| **5** | C | 1 | 2 | 2/3 | OE | 5 |
| **6** | Ref | 1 | 4 | 4 | OE | 5 OE |

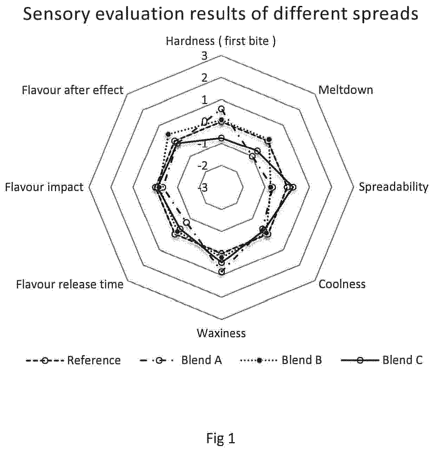

After 1 month of storage, samples 3-6 were further subjected to relative sensory evaluation by a trained test panel, with the results shown in the diagram in Figure 1. The samples were evaluated for relative Hardness (first bite), Meltdown, Spreadability, Coolness, Waxiness, Flavour release time, Flavour impact and Flavour after effect.

## Claims

1. Chocolate spread and/or filling composition comprising
cocoa butter, cocoa mass and/or cocoa powder;
one or more ingredients selected from hazelnut paste,
milk fat, milk powder, vanilla, and lecithin,
2% to 40 % by weight of a fat composition;
30% to 50% by weight of sugar;
wherein the fat composition comprises at least 40 % by weight of interesterified shea olein and optionally up to 60% by weight of a liquid vegetable oil;
wherein the interesterified shea olein has
- an oleic acid content of at least 50 % by weight and
- a stearic acid content of at least 25% by weight, based on the total C12 to C20 fatty acids present in the interesterified shea olein, and
- wherein the interesterified shea olein has a solid fat content of at least 10 % at 10°C, at least 6 % at 20°C, and at least 3 % at 30°C.

2. Chocolate spread according to claim 1, wherein the fat composition comprises at least 80%, preferably at least 90%, by weight of interesterified shea olein.

3. Chocolate spread according to claim 1 or 2, wherein the fat composition comprises at least 99% by weight of interesterified shea olein and up to 1% by weight of a liquid oil.

4. Chocolate spread according to any of the preceding claims, wherein the composition comprises 100% by weight interesterified shea olein.

5. Chocolate spread according to any of the preceding claims, wherein the liquid oil comprises soybean, sunflower and/or rapeseed oil, preferably rapeseed oil.

6. Chocolate spread according to claim 5 where in the liquid oil consists of rapeseed oil.

7. Chocolate spread composition according to any of the preceding claims, wherein the spread comprises cocoa butter, cocoa mass and/or cocoa powder, wherein the amount of cocoa butter, cocoa mass and/or cocoa powder is at least 10% by weight of the spread, preferably at least 15% by weight.

8. Chocolate spread composition according to claim 7, wherein the chocolate spread composition is essentially free of nuts components other than cocoa butter, cocoa mass and/or cocoa powder.

9. Chocolate spread composition according to any of the preceding claims, wherein the chocolate spread composition comprises a combination of milk powder and lecithin.

10. Chocolate spread composition according to any of the preceding claims, wherein the interesterified shea olein has a solid fat content in the range of from 10-20 % at 10°C, from 6-16 % at 20°C, and from 3-13 % at 30°C.

11. Chocolate spread composition according to any of the preceding claims, wherein the composition is spoonable using a dry metal spoon at temperatures in the range of 1-15 °C, preferably in the range of 4-12 °C.

12. Chocolate spread composition according to any of the preceding claims, wherein the spread does not show recrystallization after storage at 15 °C for at least one month, preferably after 3 months.

13. Chocolate spread composition according to any of the preceding claims, wherein the spread does not show oil exudation after storage at 40 °C for at least one month, preferably after 3 months.

14. Method of preparation of a chocolate spread composition and/or confectionery filling, comprising the step of mixing a fat composition with other chocolate spread ingredients;
wherein the fat composition comprises at least 40 % by weight of interesterified shea olein and optionally up to 60% by weight of a liquid vegetable oil; wherein the interesterified shea olein has
- an oleic acid content of at least 50 % by weight and
- a stearic acid content of at least 25% by weight, based on the total C12 to C20 fatty acids present in the interesterified shea olein, and
- wherein the interesterified shea olein has a solid fat content of at least 10 % at 10°C, at least 6 % at 20°C, and at least 3 % at 30°C.

15. Method according to claim 14, wherein the fat composition is mixed with
- one or more ingredients selected from hazelnut paste, cocoa butter, cocoa mass, cocoa powder, milk fat, milk powder, vanilla, and lecithin,
- sugar;
- optionally other ingredients.

## Patentansprüche

1. Schokoladenaufstrich- und/oder -füllungszusammensetzung, die Folgendes umfasst:
Kakaobutter, Kakaomasse und/oder Kakaopulver;
eine oder mehrere Zutaten, die aus Haselnusspaste, Milchfett, Milchpulver, Vanille und Lecithin ausgewählt sind,
2 Gew.-% bis 40 Gew.-% einer Fettzusammensetzung;
30 Gew.-% bis 50 Gew.-% Zucker;
wobei die Fettzusammensetzung wenigstens 40 Gew.-% umgeestertes Sheaolein und optional bis zu 60 Gew.-% eines flüssigen Pflanzenöls umfasst;
wobei das umgeesterte Sheaolein Folgendes aufweist:
- einen Oleinsäuregehalt von wenigstens 50 Gew.-% und
- einen Stearinsäuregehalt von wenigstens 25 Gew.-%, basierend auf den gesamten C12- bis C20-Fettsäuren, die in dem umgeesterten Sheaolein vorhanden sind, und
- wobei das umgeesterte Sheaolein einen Festfettgehalt von wenigstens 10 % bei 10 °C, wenigstens 6 % bei 20 °C und wenigstens 3 % bei 30 °C aufweist.

2. Schokoladenaufstrich nach Anspruch 1, wobei die Fettzusammensetzung wenigstens 80 Gew.-%, vorzugsweise wenigstens 90 Gew.-%, umgeestertes Sheaolein umfasst.

3. Schokoladenaufstrich nach Anspruch 1 oder 2, wobei die Fettzusammensetzung wenigstens 99 Gew.-% umgeestertes Sheaolein und bis zu 1 Gew.-% eines flüssigen Öls umfasst.

4. Schokoladenaufstrich nach einem der vorhergehenden Ansprüche, wobei die Zusammensetzung 100 Gew.-% umgeestertes Sheaolein umfasst.

5. Schokoladenaufstrich nach einem der vorhergehenden Ansprüche, wobei das flüssige Öl Soja-, Sonnenblumen- und/oder Rapsöl, vorzugsweise Rapsöl, umfasst.

6. Schokoladenaufstrich nach Anspruch 5, wobei das flüssige Öl aus Rapsöl besteht.

7. Schokoladenaufstrichzusammensetzung nach einem der vorhergehenden Ansprüche, wobei der Aufstrich Kakaobutter, Kakaomasse und/oder Kakaopulver umfasst, wobei die Menge an Kakaobutter, Kakaomasse und/oder Kakaopulver wenigstens 10 Gew.- % des Aufstrichs, vorzugsweise wenigstens 15 Gew.-%, beträgt.

8. Schokoladenaufstrichzusammensetzung nach Anspruch 7, wobei die Schokoladenaufstrichzusammensetzung im Wesentlichen frei von Nussbestandteilen mit Ausnahme von Kakaobutter, Kakaomasse und/oder Kakaopulver ist.

9. Schokoladenaufstrichzusammensetzung nach einem der vorhergehenden Ansprüche, wobei die Schokoladenaufstrichzusammensetzung eine Kombination aus Milchpulver und Lecithin umfasst.

10. Schokoladenaufstrichzusammensetzung nach einem der vorhergehenden Ansprüche, wobei das umgeesterte Sheaolein einen Festfettgehalt in dem Bereich von 10-20 % bei 10 °C, von 6-16 % bei 20 °C und von 3-13 % bei 30 °C aufweist.

11. Schokoladenaufstrichzusammensetzung nach einem der vorhergehenden Ansprüche, wobei die Zusammensetzung unter Verwendung eines trockenen Metalllöffels bei Temperaturen in dem Bereich von 1-15 °C, vorzugsweise in dem Bereich von 4-12 °C, löffelbar ist.

12. Schokoladenaufstrichzusammensetzung nach einem der vorhergehenden Ansprüche, wobei der Aufstrich nach Lagerung bei 15 °C für wenigstens einen Monat, vorzugsweise nach 3 Monaten, keine Rekristallisation zeigt.

13. Schokoladenaufstrichzusammensetzung nach einem der vorhergehenden Ansprüche, wobei der Aufstrich nach Lagerung bei 40 °C für wenigstens einen Monat, vorzugsweise nach 3 Monaten, keine Ölexsudation zeigt.

14. Verfahren für eine Herstellung einer Schokoladenaufstrichzusammensetzung und/oder -süßwarenfüllung, das den Schritt eines Mischens einer Fettzusammensetzung mit anderen Schokoladenaufstrichzutaten umfasst;
wobei die Fettzusammensetzung wenigstens 40 Gew.-% umgeestertes Sheaolein und optional bis zu 60 Gew.-% eines flüssigen Pflanzenöls umfasst;
wobei das umgeesterte Sheaolein Folgendes aufweist:
- einen Oleinsäuregehalt von wenigstens 50 Gew.-% und
- einen Stearinsäuregehalt von wenigstens 25 Gew.-%, basierend auf den gesamten C12- bis C20-Fettsäuren, die in dem umgeesterten Sheaolein vorhanden sind, und
- wobei das umgeesterte Sheaolein einen Festfettgehalt von wenigstens 10 % bei 10 °C, wenigstens 6 % bei 20 °C und wenigstens 3 % bei 30 °C aufweist.

15. Verfahren nach Anspruch 14, wobei die Fettzusammensetzung mit Folgendem gemischt wird:
- einer oder mehreren Zutaten, die aus Haselnusspaste, Kakaobutter, Kakaomasse, Kakaopulver, Milchfett, Milchpulver, Vanille und Lecithin ausgewählt sind,
- Zucker;
- optional anderen Zutaten.

## Revendications

1. Composition de pâte à tartiner et/ou de fourrage au chocolat comprenant du beurre de cacao, de la pâte de cacao et/ou de la poudre de cacao ;
un ou plusieurs ingrédients choisis parmi la pâte de noisette,
la matière grasse laitière, le lait en poudre, la vanille et la lécithine,
2 % à 40 % en poids d'une composition en matières grasses ;
30 % à 50 % en poids de sucre ;
dans laquelle la composition en matières grasses comprend au moins 40 % en poids d'oléine de karité interestérifiée et éventuellement jusqu'à 60 % en poids d'une huile végétale liquide ;
dans laquelle l'oléine de karité interestérifiée présente
- une teneur en acide oléique d'au moins 50 % en poids et
- une teneur en acide stéarique d'au moins 25 % en poids, sur la base de la totalité des acides gras C12 à C20 présents dans l'oléine de karité interestérifiée, et
- dans laquelle l'oléine de karité interestérifiée présente une teneur en matières grasses solides d'au moins 10 % à 10 °C, d'au moins 6 % à 20 °C et d'au moins 3 % à 30 °C.

2. Pâte à tartiner au chocolat selon la revendication 1, dans laquelle la composition en matières grasses comprend au moins 80 %, de préférence au moins 90 %, en poids d'oléine de karité interestérifiée.

3. Pâte à tartiner au chocolat selon la revendication 1 ou 2, dans laquelle la composition en matières grasses comprend au moins 99 % en poids d'oléine de karité interestérifiée et jusqu'à 1 % en poids d'une huile liquide.

4. Pâte à tartiner au chocolat selon l'une quelconque des revendications précédentes, dans laquelle la composition comprend 100 % en poids d'oléine de karité interestérifiée.

5. Pâte à tartiner au chocolat selon l'une quelconque des revendications précédentes, dans laquelle l'huile liquide comprend de l'huile de soja, de tournesol et/ou de colza, de préférence de l'huile de colza.

6. Pâte à tartiner au chocolat selon la revendication 5, dans laquelle l'huile liquide consiste en de l'huile de colza.

7. Composition de pâte à tartiner au chocolat selon l'une quelconque des revendications précédentes, dans laquelle la pâte à tartiner comprend du beurre de cacao, de la pâte de cacao et/ou de la poudre de cacao, la quantité de beurre de cacao, de pâte de cacao et/ou de poudre de cacao étant d'au moins 10 % en poids de la pâte à tartiner, de préférence au moins 15 % en poids.

8. Composition de pâte à tartiner au chocolat selon la revendication 7, dans laquelle la composition de pâte à tartiner au chocolat est essentiellement sans trace de noix autres que le beurre de cacao, la pâte de cacao et/ou la poudre de cacao.

9. Composition de pâte à tartiner au chocolat selon l'une quelconque des revendications précédentes, dans laquelle la composition de pâte à tartiner au chocolat comprend un mélange de lait en poudre et de lécithine.

10. Composition de pâte à tartiner au chocolat selon l'une quelconque des revendications précédentes, dans laquelle l'oléine de karité interestérifiée présente une teneur en matières grasses solides allant de 10 à 20 % à 10 °C, de 6 à 16 % à 20° C et de 3 à 13 % à 30 °C.

11. Composition de pâte à tartiner au chocolat selon l'une quelconque des revendications précédentes, dans laquelle la composition peut être prélevée à la cuillère, à l'aide d'une cuillère en métal sèche, à des températures allant de 1 à 15 °C, de préférence allant de 4 à 12 °C.

12. Composition de pâte à tartiner au chocolat selon l'une quelconque des revendications précédentes, dans laquelle la pâte à tartiner ne présente pas de recristallisation après une conservation à 15 °C pendant au moins un mois, de préférence après 3 mois.

13. Composition de pâte à tartiner au chocolat selon l'une quelconque des revendications précédentes, dans laquelle la pâte à tartiner ne présente pas d'exsudation d'huile après une conservation à 40 °C pendant au moins un mois, de préférence après 3 mois.

14. Procédé de préparation d'une composition de pâte à tartiner au chocolat et/ou d'un fourrage pour confiserie, comprenant l'étape consistant à mélanger une composition en matières grasses avec d'autres ingrédients de pâte à tartiner au chocolat ;
dans laquelle la composition en matières grasses comprend au moins 40 % en poids d'oléine de karité interestérifiée et éventuellement jusqu'à 60 % en poids d'une huile végétale liquide ; dans laquelle l'oléine de karité interestérifiée présente
- une teneur en acide oléique d'au moins 50 % en poids et
- une teneur en acide stéarique d'au moins 25 % en poids, sur la base de la totalité des acides gras C12 à C20 présents dans l'oléine de karité interestérifiée, et
- dans laquelle l'oléine de karité interestérifiée présente une teneur en matières grasses solides d'au moins 10 % à 10 °C, d'au moins 6 % à 20 °C et d'au moins 3 % à 30 °C.

15. Procédé selon la revendication 14, dans lequel la composition en matières grasses est mélangée à
- un ou plusieurs ingrédients choisis parmi la pâte de noisette, le beurre de cacao, la pâte de cacao, la poudre de cacao, la matière grasse laitière, le lait en poudre, la vanille et la lécithine,
- du sucre ;
- éventuellement d'autres ingrédients.
